# EUROPEAN PATENT APPLICATION

(11) **EP 2 657 289 A1**
(43) Date of publication of application: **30.10.2013**
(21) Application number: 11852075.8
(22) Date of filing: 16.12.2011
(51) Int. Cl.: C08L 27/06, C08F 2/26, C08F 214/06

(54) **VINYL CHLORIDE COPOLYMER LATEX AND METHOD FOR PRODUCING SAME**

(30) Priority: 20.12.2010 JP 2010283797; 14.06.2011 JP 2011132519
(71) Applicant: Tosoh Corporation, Yamaguchi 746-8501 (JP)
(72) Inventor: ITO Nobuyuki, 4560, Kaisei-cho, Shunan-shi Yamaguchi 746-8501 (JP); SATO Tamotsu, 4560, Kaisei-cho, Shunan-shi Yamaguchi 746-8501 (JP); WATANABE Kazunori, 4560, Kaisei-cho, Shunan-shi Yamaguchi 746-8501 (JP)
(74) Representative: Vigand, Philippe
(86) International application number: PCT/JP2011/079185
(87) International publication number: WO 2012/086543

(57) **Abstract**

The objective of the present invention is to provide: a latex which has excellent storage stability and a pH of 3-8; and a method for producing a latex, wherein less scales are generated during the polymerization. The present invention relates to: a vinyl chloride copolymer latex which is characterized by containing 0.20-10.0 parts by weight of an organic compound that has a sulfonic acid salt or a sulfuric acid ester salt and 0.05-3.0 parts by weight of a higher fatty acid salt per 100 parts by weight of a vinyl chloride-carboxylic acid vinyl ester copolymer or per 100 parts by weight of a vinyl chloride-unsaturated carboxylic acid ester copolymer and by having a pH of 3-8; and a method for producing the vinyl chloride copolymer latex.

## Description

### Technical Field

The present invention relates to a vinyl chloride-based copolymer latex and a production method thereof.

### Background Art

A vinyl chloride-based resin is inexpensive and excellent in the quality balance and therefore, is utilized in various fields such as fiber treatment and coating material. An aqueous coating solution composed of a vinyl chloride-based resin is, as compared with a solvent-based coating solution, free from an air pollution problem, a worker's safety/hygiene problem, a fire hazard problem and the like because of using no organic solvent, and its utilization is recently spreading. At the utilization, a vinyl chloride monomer is copolymerized with various monomers for imparting high functionality to the vinyl chloride resin. In particular, a vinyl carboxylate ester monomer or an unsaturated carboxylic acid ester monomer is copolymerized with a vinyl chloride monomer so as to reduce the glass transition temperature (Tg), but these esters are susceptible to hydrolysis and for preventing hydrolysis, a pH buffer is added to keep the polymerization system at a pH of 3 to 7 (Non-Patent Document 1, Patent Documents 1 to 3).

However, when a vinyl chloride and a vinyl ester are copolymerized by adding a pH buffer conventionally used in general, such as sodium bicarbonate, sodium carbonate, sodium acetate, monovalent or divalent potassium phosphate, sodium citrate, sodium tartrate and sodium benzoate, the latex solution may be prevented from pH reduction during polymerization, but a large amount of scale is generated disadvantageously in the course of polymerization.

### Background Art Document

### Patent Document

Patent Document 1: JP-A-2002-293811 (the term "JP-A" as used herein means an "unexamined published Japanese patent application")
Patent Document 2: JP-A-8-269114
Patent Document 3: JP-A-8-188605

### Non-Patent Document

Non-Patent Document 1: Soichi Muroi, Kobunshi Latex no Kagaku (Chemistry of Polymer Latex), Kobunshi Kanko Kai, page 184 (1970)

### Summary of Invention

### Problem that Invention is to Solve

The present invention has been made by taking into account those problems and provides a latex exhibiting excellent storage stability and having pH of 3 to 8, and a production method of the latex, where the amount of scale generated during polymerization is lessened.

### Means for Solving Problem

As a result of a number of intensive studies on the problems above, the present inventors have found that when an organic compound having a sulfonate or sulfuric acid ester salt and a higher fatty acid salt are added during polymerization such that the organic compound having a sulfonate or sulfuric acid ester salt and the higher fatty acid salt account for 0.20 to 10.0 parts by weight and from 0.05 to 3.0 parts by weight, respectively, per 100 parts by weight of a vinyl chloride-vinyl carboxylate ester copolymer or 100 parts by weight of a vinyl chloride-unsaturated carboxylic acid ester copolymer, the amount of scale generated in the course of polymerization is lessened and the latex obtained after polymerization can be prevented from pH reduction. More specifically, the present invention includes a vinyl chloride-based copolymer latex comprising from 0.20 to 10.0 parts by weight of an organic compound having a sulfonate or sulfuric acid ester salt and from 0.05 to 3.0 parts by weight of a higher fatty acid salt, per 100 parts by weight of a vinyl chloride-vinyl carboxylate ester copolymer or 100 parts by weight of a vinyl chloride-unsaturated carboxylic acid ester copolymer, wherein pH is from 3 to 8; and a production method thereof.

That is, the gist of the present invention resides in the following (1) to (8).
(1) A vinyl chloride-based copolymer latex, comprising:
   from 0.20 to 10.0 parts by weight of an organic compound having a sulfonate or sulfuric acid ester salt and from 0.05 to 3.0 parts by weight of a higher fatty acid salt, per 100 parts by weight of a vinyl chloride-vinyl carboxylate ester copolymer or 100 parts by weight of a vinyl chloride-unsaturated carboxylic acid ester copolymer,
   wherein pH is from 3 to 8.
(2) The vinyl chloride-based copolymer latex as described in (1),
   wherein, preferably, the organic compound having a sulfonate or sulfuric acid ester salt is at least one kind selected from an alkyl sulfate ester salt, an alkylbenzenesulfonate and a dialkylsulfosuccinate.
(3) The vinyl chloride-based copolymer latex as described in (1) or (2), wherein, preferably, the organic compound having a sulfonate or sulfuric acid ester salt is a salt of an organic compound having a sulfonic acid or sulfuric acid ester with any one of potassium, sodium, ammonium and triethanolamine.
(4) The vinyl chloride-based copolymer latex as described in any one of (1) to (3),
   wherein, preferably, the higher fatty acid salt is a salt of a higher fatty acid with any one of potassium, sodium, ammonium and triethanolamine.
(5) The vinyl chloride-based copolymer latex as described in any one of (1) to (4),
   wherein, preferably, the vinyl carboxylate ester is vinyl acetate.
(6) The vinyl chloride-based copolymer latex as described in any one of (1) to (4),
   wherein, preferably, the unsaturated carboxylic acid ester is methacrylic acid or acrylic acid.
(7) A method for producing the vinyl chloride-based copolymer latex described in any one of (1) to (6), comprising:
   at copolymerization in an aqueous medium between a vinyl chloride monomer and a vinyl carboxylate ester monomer or between a vinyl chloride monomer and an unsaturated carboxylic acid ester monomer, performing emulsion polymerization in presence of 0.05 to 10.0 parts by weight of an organic compound having a sulfonate or sulfuric acid eater salt and from 0.05 to 1.0 parts by weight of a higher fatty acid salt, per 100 parts by weight of the vinyl chloride monomer and vinyl carboxylate ester monomer or 100 parts by weight of the vinyl chloride monomer and unsaturated carboxylic acid ester monomer.
(8) The method for producing the vinyl chloride-based copolymer latex as described in (7),
   wherein, preferably, the higher fatty acid salt is added sequentially or in parts.

### Effects of Invention

In the present invention, a vinyl chloride-based copolymer latex exhibiting excellent storage stability and having pH of 3 to 8, and a production method of the vinyl chloride-based copolymer latex, where the amount of scale generated during polymerization is lessened and the latex obtained after polymerization has pH of 3 to 8, can be provided.

### Mode for Carrying Out Invention

The present invention is described in detail below.
The vinyl chloride-based copolymer latex of the present invention contains from 0.20 to 10.0 parts by weight of an organic compound having a sulfonate or sulfuric acid ester salt and from 0.05 to 3.0 parts by weight of a higher fatty acid salt, per 100 parts by weight of a vinyl chloride-vinyl carboxylate ester copolymer or 100 parts by weight of a vinyl chloride-unsaturated carboxylic acid ester copolymer.

The vinyl chloride-vinyl carboxylate ester copolymer is obtained by copolymerizing a vinyl chloride monomer and a vinyl carboxylate ester monomer.
Examples of the vinyl carboxylate ester include vinyl acetate, vinyl propionate, vinyl myristate, vinyl benzoate and the like, and two or more kinds of these esters may be also used.

The vinyl chloride-unsaturated carboxylic acid ester copolymer is obtained by copolymerizing a vinyl chloride monomer and an unsaturated carboxylic acid ester monomer.
Examples of the unsaturated carboxylic acid ester include an ester such as methyl, ethyl and butyl of an acrylic acid and the like, an ester such as methyl, ethyl and butyl of a methacrylic acid and the like, a maleic acid ester, a fumaric acid ester, a cinnamic acid ester and the like, and two or more kinds of these esters may be also used.
Examples of the method for copolymerizing vinyl chloride with a vinyl carboxylic acid ester and the method for copolymerizing vinyl chloride with an unsaturated carboxylic acid ester include emulsion polymerization, solution polymerization, gas phase polymerization and the like.

Examples of the compound having a sulfonate include an alkylbenzenesulfonate such as sodium dodecylbenzenesulfonate, ammonium dodecylbenzenesulfonate and the like; dialkylsulfosuccinates such as sodium dioctylsulfosuccinate, sodium dihexylsulfosuccinate and the like; alkylnaphthalenesulfonates such as sodium alkylnaphthalenesulfonate and the like; and alkyldiphenyl ether disulfonates such as sodium alkyldiphenyl ether disulfonate and the like. Examples of the organic compound having a sulfuric acid ester salt include alkylsulfuric acid ester salts such as sodium laurylsulfate ester, sodium myristylsulfate ester and the like; polyoxyethylene alkyl sulfate ester salts; polyoxyethylene alkylaryl sulfate ester salts; and the like. The content of the organic compound having a sulfonate or sulfuric acid ester salt is from 0.20 to 10.0 parts by weight. If the content is less than 0.20 parts by weight, the storage stability is poor and the latex becomes unstable, whereas if the content exceeds 10.0 parts by weight, the compound works out to an impurity of the vinyl chloride-based copolymer. The content of the organic compound having a sulfonate or sulfuric acid ester salt is preferably from 1.0 to 5.0 parts by weight.

Examples of the higher fatty acid salt include a salt of lauric acid, myristic acid, palmitic acid, steric acid, oleic acid or the like with an alkali. In view of availability, a salt with sodium, potassium, ammonia or triethanolamine is preferred. The content of the higher fatty acid salt is from 0.05 to 3.0 parts by weight. If the content is less than 0.05 parts by weight, pH falls below 3, whereas if the content exceeds 3.0 parts by weight, pH exceeds 8. The content of the higher fatty acid salt is preferably from 0.1 to 1.0 parts by weight.

The vinyl chloride-based copolymer latex of the present invention has pH of 3 to 8. If pH deviates from the range of 3 to 8, hydrolysis of the vinyl chloride-vinyl carboxylate ester copolymer or the vinyl chloride-unsaturated carboxylic acid ester copolymer proceeds and the quality of the latex is impaired.
The vinyl chloride-based copolymer latex of the present invention may contain a chain transfer agent, a reducing agent, a buffering agent, an emulsifier (other than the organic compound having a sulfonate or sulfuric acid ester salt and the higher fatty acid salt), and the like.

The vinyl chloride-based copolymer latex of the present invention is obtained by, at the copolymerization using water as a dispersion medium between a vinyl chloride monomer and a vinyl carboxylate ester monomer or between a vinyl chloride monomer and an unsaturated carboxylic acid ester monomer, performing emulsion polymerization by using from 0.05 to 10.0 parts by weight of an organic compound having a sulfonate or sulfuric acid eater salt and from 0.05 to 1.0 parts by weight of a higher fatty acid salt, per 100 parts by weight of the vinyl chloride monomer and vinyl carboxylate ester monomer or 100 parts by weight of the vinyl chloride monomer and unsaturated carboxylic acid ester monomer. If the content of the organic compound having a sulfonate or sulfuric acid ester salt is less than 0.05 parts by weight, the polymerization becomes unstable, whereas if the content exceeds 10.0 parts by weight, bubbling disadvantageously occurs. The content of the organic compound having a sulfonate or sulfuric acid ester salt is preferably from 0.05 to 3.0 parts by weight, per 100 parts by weight of the vinyl chloride monomer and vinyl carboxylate ester monomer or 100 parts by weight of the vinyl chloride monomer and unsaturated carboxylic acid ester monomer. If the content of the higher fatty acid salt is less than 0.05 parts by weight, pH during polymerization lowers, whereas even if the higher fatty acid salt is added in excess of 1.0 parts by weight, its effect is low. The organic compound having a sulfonate or sulfuric acid eater salt is appropriately added before the initiation of polymerization, during polymerization, or after the completion of polymerization. The higher fatty acid salt may be added any timing of before the initiation of polymerization, during polymerization or after the completion of polymerization, and the higher fatty acid salt may be added by sequential addition or addition in parts during polymerization. Among others, it is preferred to add the higher fatty acid salt sequentially or in parts, because the latex can be adjusted to pH of 3 to 8 by the addition in a small amount.

Examples of the polymerization initiator includes a water-soluble initiator such as potassium persulfate, ammonium persulfate and the like, and an oil-soluble initiator such as 2,2'-azobisisobutyronitrile, 2,2'-azobis-2-methylbutyronitrile, lauroyl peroxide, t-butyl peroxypivalate, diacyl peroxide, peroxyester, peroxydicarbonate and the like.

The polymerization temperature is not particularly limited but is preferably from 30 to 100°C, more preferably from 40 to 80°C.
The polymerization time is not particularly limited but is preferably from 3 to 24 hours.
The polymerization ratio of the vinyl chloride monomer and vinyl carboxylate ester monomer or of the vinyl chloride monomer and unsaturated carboxylic acid ester monomer is preferably from 80 to 97 wt% based on all monomers.
The polymerization is terminated by lowering the pressure in the vessel to normal pressure and further to reduced pressure and recovering the monomers. The polymerization may be also terminated by adding a polymerization inhibitor.

The organic compound having a sulfonate or sulfuric acid ester salt may be additionally added, if desired, to the latex after the completion of polymerization so as to contain from 0.20 to 10.0 parts by weight of the organic compound, per 100 parts by weight of a vinyl chloride-vinyl carboxylate ester copolymer or 100 parts by weight of a vinyl chloride-unsaturated carboxylic acid ester copolymer. Also, the higher fatty acid salt may be additionally added so as to contain from 0.05 to 3.0 parts by weight of the higher fatty acid salt, per 100 parts by weight of a vinyl chloride-vinyl carboxylate ester copolymer or 100 parts by weight of a vinyl chloride-unsaturated carboxylic acid ester copolymer.

At the time of producing the vinyl chloride-based copolymer latex of the present invention, a chain transfer agent, a reducing agent, a buffering agent, an emulsifier (other than the organic compound having a sulfonate or sulfuric acid ester salt and the higher fatty acid salt), and the like may be also added for the purpose of stabilizing the polymerization or reducing the amount of scale generated.

### Examples

The present invention is described in greater detail below by referring to Examples, but the present invention is not limited thereto.
The average particle diameter, the solid content concentration, pH, the amount of scale generated, and the storage stability of latex are as follows.

### <Average Particle Diameter>

A measurement sample prepared by adding water to the vinyl chloride-based copolymer latex, thereby adjusting the concentration to give a laser transmittance of 84 to 86%, was measured for the median diameter by using a laser diffraction/scattering particle size analyzer (LA-920, trade name, manufactured by Horiba Seisakusho, Ltd.), and the obtained value was taken as the average particle diameter.

### <Solid Content Concentration>

The vinyl chloride-based copolymer latex was weighed 5 g in an aluminum pan and after measuring the weight, the latex was dried in a dryer at 40°C for 24 hours to evaporate the water. Subsequently, the weight of the dried product was measured, and the solid content concentration was calculated from the ratio of the weights.

### <pH>

pH of the vinyl chloride-based copolymer latex was measured at room temperature by means of a pH meter (D-12, trade name, manufactured by Horiba Seisakusho, Ltd.) without adjusting the concentration.

### <Amount of Scale Generated>

The resin deposit on the wall surface and stirring blade of a 2.5-L autoclave and the obtained vinyl chloride-based copolymer latex were filtered through a 60-mesh wire screen, and the collected resin material was dried in a dryer at 40°C for 72 hours to evaporate the water. Subsequently, the weight of the dried product was measured, and the ratio of this weight to the weight of the monomer mixture charged into the autoclave was expressed in percentage and taken as the amount of scale generated.

### <Storage Stability of Latex>

The vinyl chloride-based copolymer latex was diluted with water to adjust the solid content to 30 wt%. A 500 g portion thereof was put in a transparent glass bottle and left standing still at room temperature for 2 weeks, and the presence or absence of precipitate generation in the latex was confirmed with an eye and evaluated as follows.
A: Precipitate generation was not observed at all.
B: Precipitate generation was slightly observed.
C: Generation of a large amount of precipitates was observed.

### Example 1:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 46 g of an aqueous 5 wt% potassium laurate solution (0.38 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 11 g of potassium laurate at a concentration of 5 wt% (0.09 parts by weight based on the monomers) were additionally added to obtain a vinyl chloride-based copolymer latex (sodium dodecylbenzenesulfonate: 2.06 parts by weight, potassium laurate: 0.53 parts by weight, per 100 parts by weight of vinyl chloride-vinyl carboxylate ester copolymer). The amount of latex scale generated was as small as 0.82 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 2:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 23 g of an aqueous 5 wt% potassium laurate solution (0.19 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 6 g of potassium laurate at a concentration of 5 wt% (0.05 parts by weight based on the monomers) were additionally added to obtain a vinyl chloride-based copolymer latex (sodium dodecylbenzenesulfonate: 2.06 parts by weight, potassium laurate: 0.27 parts by weight, per 100 parts by weight of vinyl chloride-vinyl carboxylate ester copolymer). The amount of latex scale generated was as small as 0.86 wt%, pH was 5.0 falling in the range of pH 3 to 8, and the average particle diameter when measured was 0.1 µm.
The storage stability of the latex was evaluated, as a result, precipitate generation was not observed at all (A), revealing good storage stability.

### Example 3:

A 2.5-L autoclave was charged with 670 g of deionized water, 552 g of vinyl chloride monomer, 48 g of vinyl acetate monomer, 5 g of 3 wt% potassium persulfate, 60 g of an aqueous 5 wt% sodium dodecylbenzenesulfonate solution (0.50 parts by weight based on the monomers) and 46 g of an aqueous 5 wt% potassium laurate solution (0.38 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 11 g of potassium laurate at a concentration of 5 wt% (0.09 parts by weight based on the monomers) were additionally added to obtain a vinyl chloride-based copolymer latex (sodium dodecylbenzenesulfonate: 2.06 parts by weight, potassium laurate: 0.53 parts by weight, per 100 parts by weight of vinyl chloride-vinyl carboxylate ester copolymer). The amount of latex scale generated was as small as 0.78 wt%, pH was 4.2 falling in the range of pH 3 to 8, and the average particle diameter when measured was 0.15 µm.
The storage stability of the latex was evaluated, as a result, precipitate generation was not observed at all (A), revealing good storage stability.

### Example 4:

A 2.5-L autoclave was charged with 670 g of deionized water, 552 g of vinyl chloride monomer, 48 g of vinyl acetate monomer, 5 g of 3 wt% potassium persulfate, 60 g of an aqueous 5 wt% sodium dodecylbenzenesulfonate solution (0.50 parts by weight based on the monomers) and 92 g of an aqueous 5 wt% potassium laurate solution (0.77 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 22 g of potassium laurate at a concentration of 5 wt% (0.18 parts by weight based on the monomers) were additionally added to obtain a vinyl chloride-based copolymer latex (sodium dodecylbenzenesulfonate: 2.06 parts by weight, potassium laurate: 1.06 parts by weight, per 100 parts by weight of vinyl chloride-vinyl carboxylate ester copolymer). The amount of latex scale generated was as small as 0.88 wt%, pH was 4.2 falling in the range of pH 3 to 8, and the average particle diameter when measured was 0.16 µm.
The storage stability of the latex was evaluated, as a result, precipitate generation was not observed at all (A), revealing good storage stability.

### Example 5:

A 2.5-L autoclave was charged with 670 g of deionized water, 552 g of vinyl chloride monomer, 48 g of vinyl acetate monomer, 5 g of 3 wt% potassium persulfate and 84 g of an aqueous 5 wt% sodium dodecylbenzenesulfonate solution (0.70 parts by weight based on the monomers), and by raising the temperature to 66°C, emulsion polymerization was initiated. The temperature was kept at 66°C and immediately after the initiation of polymerization, 24 g of an aqueous 5 wt% potassium laurate solution (0.20 parts by weight based on the monomers) was continuously added over 300 minutes. After the pressure in the autoclave at 66°C was reduced to 0.65 MPa, unreacted vinyl chloride monomer and vinyl acetate monomer were recovered. To the residue, 132 g of sodium dodecylbenzenesulfonate at a concentration of 5 wt% (1.10 parts by weight based on the monomers) and 24 g of an aqueous 5 wt% potassium laurate solution (0.20 parts by weight based on the monomers) were additionally added to obtain a vinyl chloride-based copolymer latex (sodium dodecylbenzenesulfonate: 2.00 parts by weight, potassium laurate: 0.44 parts by weight, per 100 parts by weight of vinyl chloride-vinyl carboxylate ester copolymer). The amount of latex scale generated was as small as 0.81 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 6:

A 2.5-L autoclave was charged with 670 g of deionized water, 595.2 g of vinyl chloride monomer, 4.8 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 46 g of an aqueous 5 wt% potassium laurate solution (0.38 parts by weight based on the monomers) were continuously added over 290 minutes. After the pressure in the autoclave at 66°C was reduced to 0.70 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 11 g of potassium laurate at a concentration of 5 wt% (0.09 parts by weight based on the monomers) were additionally added to obtain a vinyl chloride-based copolymer latex (sodium dodecylbenzenesulfonate: 2.06 parts by weight, potassium laurate: 0.53 parts by weight, per 100 parts by weight of vinyl chloride-vinyl carboxylate ester copolymer). The amount of latex scale generated was as small as 0.86 wt%, pH was 6.5 falling in the range of pH 3 to 8, and the average particle diameter when measured was 0.1 µm.
The storage stability of the latex was evaluated, as a result, precipitate generation was not observed at all (A), revealing good storage stability.

### Example 7:

A 2.5-L autoclave was charged with 670 g of deionized water, 595.2 g of vinyl chloride monomer, 4.8 g of vinyl acetate monomer, 11 g of 3 wt% potassium persulfate and 60 g of an aqueous 5 wt% sodium dodecylbenzenesulfonate solution (0.50 parts by weight based on the monomers), and by raising the temperature to 60°C, emulsion polymerization was initiated. The temperature was kept at 60°C and from 60 minutes after the initiation of polymerization, 130 g of an aqueous 5 wt% sodium dodecylbenzenesulfonate solution (1.08 parts by weight based on the monomers) and 46 g of an aqueous 5 wt% potassium laurate solution (0.38 parts by weight based on the monomers) were continuously added over 290 minutes. After the pressure in the autoclave at 60°C was reduced to 0.59 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 11 g of potassium laurate at a concentration of 5 wt% (0.09 parts by weight based on the monomers) were additionally added to obtain a vinyl chloride-based copolymer latex (sodium dodecylbenzenesulfonate: 2.06 parts by weight, potassium laurate: 0.53 parts by weight, per 100 parts by weight of vinyl chloride-vinyl carboxylate ester copolymer). The amount of latex scale generated was as small as 0.91 wt%, pH was 6.1 falling in the range of pH 3 to 8, and the average particle diameter when measured was 0.1 µm.
The storage stability of the latex was evaluated, as a result, precipitate generation was not observed at all (A), revealing good storage stability.

### Example 8:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 46 g of an aqueous 5 wt% potassium laurate solution (0.38 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 225 g of sodium dodecylbenzenesulfonate at a concentration of 15 wt% (5.63 parts by weight based on the monomers) and 11 g of potassium laurate at a concentration of 5 wt% (0.09 parts by weight based on the monomers) were additionally added to obtain a vinyl chloride-based copolymer latex (sodium dodecylbenzenesulfonate: 8.01 parts by weight, potassium laurate: 0.53 parts by weight, per 100 parts by weight of vinyl chloride-vinyl carboxylate ester copolymer). The amount of latex scale generated was as small as 0.82 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 9:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium laurylsulfate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium laurylsulfate solution (1.08 parts by weight based on the monomers) and 46 g of an aqueous 5 wt% potassium laurate solution (0.38 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium laurylsulfate at a concentration of 5 wt% (0.27 parts by weight based on the monomers) and 11 g of potassium laurate at a concentration of 5 wt% (0.09 parts by weight based on the monomers) were additionally added to obtain a vinyl chloride-based copolymer latex (sodium laurylsulfate: 2.06 parts by weight, potassium laurate: 0.53 parts by weight, per 100 parts by weight of vinyl chloride-vinyl carboxylate ester copolymer). The amount of latex scale generated was as small as 0.90 wt%, pH was 6.4 falling in the range of pH 3 to 8, and the average particle diameter when measured was 0.12 µm.
The storage stability of the latex was evaluated, as a result, precipitate generation was not observed at all (A), revealing good storage stability.

### Example 10:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 46 g of an aqueous 5 wt% sodium stearate solution (0.38 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 11 g of sodium stearate at a concentration of 5 wt% (0.09 parts by weight based on the monomers) were additionally added to obtain a vinyl chloride-based copolymer latex (sodium dodecylbenzenesulfonate: 2.06 parts by weight, sodium stearate: 0.53 parts by weight, per 100 parts by weight of vinyl chloride-vinyl carboxylate ester copolymer). The amount of latex scale generated was as small as 0.89 wt%, pH was 6.5 falling in the range of pH 3 to 8, and the average particle diameter when measured was 0.1 µm.
The storage stability of the latex was evaluated, as a result, precipitate generation was not observed at all (A), revealing good storage stability.

### Example 11:

A 2.5-L autoclave was charged with 670 g of deionized water, 595.2 g of vinyl chloride monomer, 4.8 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 46 g of an aqueous 5 wt% potassium laurate solution (0.38 parts by weight based on the monomers) were continuously added over 290 minutes. After the pressure in the autoclave at 66°C was reduced to 0.70 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 46 g of potassium laurate at a concentration of 5 wt% (0.38 parts by weight based on the monomers) were additionally added to obtain a vinyl chloride-based copolymer latex (sodium dodecylbenzenesulfonate: 2.06 parts by weight, potassium laurate: 0.85 parts by weight, per 100 parts by weight of vinyl chloride-vinyl carboxylate ester copolymer). The amount of latex scale generated was as small as 0.86 wt%, pH was 7.7 falling in the range of pH 3 to 8, and the average particle diameter when measured was 0.1 µm.
The storage stability of the latex was evaluated, as a result, precipitate generation was not observed at all (A), revealing good storage stability.

### Example 12:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 46 g of an aqueous 5 wt% potassium laurate solution (0.38 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 46 g of potassium laurate at a concentration of 5 wt% (0.38 parts by weight based on the monomers) were additionally added to obtain a vinyl chloride-based copolymer latex (sodium dodecylbenzenesulfonate: 2.06 parts by weight, potassium laurate: 0.85 parts by weight, per 100 parts by weight of vinyl chloride-vinyl carboxylate ester copolymer). The amount of latex scale generated was as small as 0.82 wt%, pH was 7.6 falling in the range of pH 3 to 8, and the average particle diameter when measured was 0.1 µm.
The storage stability of the latex was evaluated, as a result, precipitate generation was not observed at all (A), revealing good storage stability.

### Comparative Example 1:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 2.4 g of an aqueous 5 wt% potassium laurate solution (0.02 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, potassium laurate: 0.02 parts by weight, per 100 parts by weight of vinyl chloride-vinyl carboxylate ester copolymer). The amount of latex scale generated was as small as 0.86 wt%, and the average particle diameter when measured was 0.1 µm, but pH was 2.2 which was low result.
The storage stability of the latex was evaluated, as a result, precipitate generation was not observed at all (A), revealing good storage stability.

### Comparative Example 2:

A 2.5-L autoclave was charged with 670 g of deionized water, 552 g of vinyl chloride monomer, 48 g of vinyl acetate monomer, 5 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 184 g of an aqueous 5 wt% potassium laurate solution (1.53 parts by weight based on the monomers) were continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) and 184 g of potassium laurate at a concentration of 5 wt% (1.53 parts by weight based on the monomers) were additionally added to obtain a vinyl chloride-based copolymer latex (sodium dodecylbenzenesulfonate: 2.06 parts by weight, potassium laurate: 3.41 parts by weight, per 100 parts by weight of vinyl chloride-vinyl carboxylate ester copolymer). The amount of latex scale generated was as small as 0.83 wt%, and the average particle diameter when measured was 0.1 µm, but pH was 8.1 which was high result.
The storage stability of the latex was evaluated, as a result, precipitate generation was not observed at all (A), revealing good storage stability.

### Comparative Example 3:

A 2.5-L autoclave was charged with 670 g of deionized water, 552 g of vinyl chloride monomer, 48 g of vinyl acetate monomer, 5 g of 3 wt% potassium persulfate and 2.4 g of an aqueous 5 wt% sodium dodecylbenzenesulfonate solution (0.02 parts by weight based on the monomers), and by raising the temperature to 66°C, emulsion polymerization was initiated. The temperature was kept at 66°C and from 60 minutes after the initiation of polymerization, 46 g of an aqueous 5 wt% potassium laurate solution (0.38 parts by weight based on the monomers) was continuously added over 290 minutes. After the pressure in the autoclave at 66°C was reduced to 0.65 MPa, unreacted vinyl chloride monomer and vinyl acetate monomer were recovered. To the residue, 11 g of potassium laurate at a concentration of 5 wt% (0.09 parts by weight based on the monomers) was additionally added to obtain a vinyl chloride-based copolymer latex (sodium dodecylbenzenesulfonate: 0.02 parts by weight, potassium laurate: 0.53 parts by weight, per 100 parts by weight of vinyl chloride-vinyl carboxylate ester copolymer). The amount of latex scale generated was as small as 0.95 wt%, pH was 6.7 falling in the range of pH 3 to 8, and the average particle diameter when measured was 0.13 µm.
The storage stability of the latex was evaluated, as a result, generation of a large amount of precipitates was observed (C), revealing poor storage stability.

### Comparative Example 4:

A 2.5-L autoclave was charged with 670 g of deionized water, 552 g of vinyl chloride monomer, 48 g of vinyl acetate monomer, 5 g of 3 wt% potassium persulfate, 60 g of an aqueous 5 wt% sodium dodecylbenzenesulfonate solution (0.50 parts by weight based on the monomers) and 3.2 g of 25 wt% potassium bicarbonate (0.13 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, potassium bicarbonate: 0.15 parts by weight, per 100 parts by weight of vinyl chloride-vinyl carboxylate ester copolymer). pH was 4.1 falling in the range of pH 3 to 8, and the average particle diameter when measured was 0.1 µm, but the amount of latex scale generated was as large as 1.8 wt%.
The storage stability of the latex was evaluated, as a result, precipitate generation was not observed at all (A), revealing good storage stability.

### Comparative Example 5:

A 2.5-L autoclave was charged with 670 g of deionized water, 552 g of vinyl chloride monomer, 48 g of vinyl acetate monomer, 5 g of 3 wt% potassium persulfate, 60 g of an aqueous 5 wt% sodium dodecylbenzenesulfonate solution (0.50 parts by weight based on the monomers) and 3.2 g of 25 wt% sodium acetate (0.13 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, sodium acetate: 0.15 parts by weight, per 100 parts by weight of vinyl chloride-vinyl carboxylate ester copolymer). pH was 3.9 falling in the range of pH 3 to 8, and the average particle diameter when measured was 0.1 µm, but the amount of latex scale generated was as large as 2.0 wt%.
The storage stability of the latex was evaluated, as a result, precipitate generation was not observed at all (A), revealing good storage stability.

### Comparative Example 6:

A 2.5-L autoclave was charged with 670 g of deionized water, 552 g of vinyl chloride monomer, 48 g of vinyl acetate monomer, 5 g of 3 wt% potassium persulfate, 60 g of an aqueous 5 wt% sodium dodecylbenzenesulfonate solution (0.50 parts by weight based on the monomers) and 3.2 g of 25 wt% sodium dihydrogenphosphate (0.13 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 290 minutes. After the pressure in the autoclave at 66°C was reduced to 0.65 MPa, unreacted vinyl chloride monomer and vinyl acetate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, sodium dihydrogenphosphate: 0.15 parts by weight, per 100 parts by weight of vinyl chloride-vinyl carboxylate ester copolymer). pH was 3.2 falling in the range of pH 3 to 8, and the average particle diameter when measured was 0.1 µm, but the amount of latex scale generated was as large as 1.6 wt%.
The storage stability of the latex was evaluated, as a result, precipitate generation was not observed at all (A), revealing good storage stability.

### Example 13:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and butyl acrylate monomer were recovered. To the residue, 56.4 g of sodium dodecylbenzenesulfonate at a concentration of 5 wt% (0.47 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.44 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 14:

A 2.5-L autoclave was charged with 670 g of deionized water, 540 g of vinyl chloride monomer, 5.4 g of 3 wt% potassium persulfate and 60 g of an aqueous 5 wt% sodium dodecylbenzenesulfonate solution (0.50 parts by weight based on the monomer), and by raising the temperature to 66°C, emulsion polymerization was initiated. The temperature was kept at 66°C and immediately after the initiation of polymerization, 60 g of butyl acrylate monomer was continuously added over 300 minutes. Furthermore, from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and butyl acrylate monomer were recovered. To the residue, 56.4 g of sodium dodecylbenzenesulfonate at a concentration of 5 wt% (0.47 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.47 wt%, pH was 6.9 falling in the range of pH 3 to 8, and the average particle diameter when measured was 0.1 µm.
The storage stability of the latex was evaluated, as a result, precipitate generation was not observed at all (A), revealing good storage stability.

### Example 15:

A 2.5-L autoclave was charged with 670 g of deionized water, 540 g of vinyl chloride monomer, 60 g of butyl acrylate monomer, 5.4 g of 3 wt% potassium persulfate and 84 g of an aqueous 5 wt% sodium dodecylbenzenesulfonate solution (0.70 parts by weight based on the monomers), and by raising the temperature to 66°C, emulsion polymerization was initiated. The temperature was kept at 66°C and immediately after the initiation of polymerization, 24 g of an aqueous 5 wt% potassium laurate solution (0.20 parts by weight based on the monomers) was continuously added over 300 minutes. After the pressure in the autoclave at 66°C was reduced to 0.70 MPa, unreacted vinyl chloride monomer and butyl acrylate monomer were recovered. To the residue, 138 g of sodium dodecylbenzenesulfonate at a concentration of 5 wt% (1.15 parts by weight based on the monomers) and 36 g of an aqueous 5 wt% potassium laurate solution (0.30 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.49 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 16:

A 2.5-L autoclave was charged with 670 g of deionized water, 540 g of vinyl chloride monomer, 5.4 g of 3 wt% potassium persulfate and 84 g of an aqueous 5 wt% sodium dodecylbenzenesulfonate solution (0.70 parts by weight based on the monomer), and by raising the temperature to 66°C, emulsion polymerization was initiated. The temperature was kept at 66°C and immediately after the initiation of polymerization, 60 g of butyl acrylate monomer and 24 g of an aqueous 5 wt% potassium laurate solution (0.20 parts by weight based on the monomers) were continuously added over 300 minutes. After the pressure in the autoclave at 66°C was reduced to 0.70 MPa, unreacted vinyl chloride monomer and butyl acrylate monomer were recovered. To the residue, 138 g of sodium dodecylbenzenesulfonate at a concentration of 5 wt% (1.15 parts by weight based on the monomers) and 36 g of an aqueous 5 wt% potassium laurate solution (0.30 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.49 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 17:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 38.4 g of an aqueous 5 wt% potassium laurate solution (0.32 parts by weight based on the monomers) was continuously added over 240 minutes. After the pressure in the autoclave at 66°C was reduced to 0.70 MPa, unreacted vinyl chloride monomer and butyl acrylate monomer were recovered. To the residue, 21.6 g of potassium laurate at a concentration of 5 wt% (0.18 parts by weight based on the monomers) was additionally added to obtain a vinyl chloride-based copolymer latex (sodium dodecylbenzenesulfonate: 0.56 parts by weight, potassium laurate: 0.56 parts by weight, per 100 parts by weight of vinyl chloride-unsaturated carboxylic acid ester copolymer). The amount of latex scale generated was as small as 0.70 wt%, pH was 6.7 falling in the range of pH 3 to 8, and the average particle diameter when measured was 0.11 µm.
The storage stability of the latex was evaluated, as a result, precipitate generation was not observed at all (A), revealing good storage stability.

### Example 18:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and butyl acrylate monomer were recovered. To the residue, 264.8 g of sodium dodecylbenzenesulfonate at a concentration of 15 wt% (6.62 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 8.89 parts by weight, potassium laurate: 0.56 parts by weight, per 100 parts by weight of vinyl chloride-unsaturated carboxylic acid ester copolymer). The amount of latex scale generated was as small as 0.48 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Example 19:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 22.8 g of an aqueous 5 wt% potassium laurate solution (0.19 parts by weight based on the monomers) were continuously added over 240 minutes. After the pressure in the autoclave at 66°C was reduced to 0.70 MPa, unreacted vinyl chloride monomer and butyl acrylate monomer were recovered. To the residue, 56.4 g of sodium dodecylbenzenesulfonate at a concentration of 5 wt% (0.47 parts by weight based on the monomers) and 6 g of potassium laurate at a concentration of 5 wt% (0.05 parts by weight based on the monomers) were additionally added to obtain a vinyl chloride-based copolymer latex (sodium dodecylbenzenesulfonate: 2.06 parts by weight, potassium laurate: 0.27 parts by weight, per 100 parts by weight of vinyl chloride-unsaturated carboxylic acid ester copolymer). The amount of latex scale generated was as small as 0.46 wt%, pH was 6.1 falling in the range of pH 3 to 8, and the average particle diameter when measured was 0.1 µm.
The storage stability of the latex was evaluated, as a result, precipitate generation was not observed at all (A), revealing good storage stability.

### Example 20:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 60.0 g of an aqueous 5 wt% potassium laurate solution (0.50 parts by weight based on the monomers) were continuously added over 240 minutes. After the pressure in the autoclave at 66°C was reduced to 0.70 MPa, unreacted vinyl chloride monomer and butyl acrylate monomer were recovered. To the residue, 56.4 g of sodium dodecylbenzenesulfonate at a concentration of 5 wt% (0.47 parts by weight based on the monomers) and 156 g of potassium laurate at a concentration of 5 wt% (1.30 parts by weight based on the monomers) were additionally added to obtain a vinyl chloride-based copolymer latex (sodium dodecylbenzenesulfonate: 2.06 parts by weight, potassium laurate: 2.00 parts by weight, per 100 parts by weight of vinyl chloride-unsaturated carboxylic acid ester copolymer). The amount of latex scale generated was as small as 0.41 wt%, pH was 7.5 falling in the range of pH 3 to 8, and the average particle diameter when measured was 0.1 µm.
The storage stability of the latex was evaluated, as a result, precipitate generation was not observed at all (A), revealing good storage stability.

### Example 21:

A 2.5-L autoclave was charged with 670 g of deionized water, 540 g of vinyl chloride monomer, 60 g of butyl methacrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and butyl methacrylate monomer were recovered. To the residue, 56.4 g of sodium dodecylbenzenesulfonate at a concentration of 5 wt% (0.47 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.38 wt%, pH was 6.4 falling in the range of pH 3 to 8, and the average particle diameter when measured was 0.1 µm.
The storage stability of the latex was evaluated, as a result, precipitate generation was not observed at all (A), revealing good storage stability.

### Example 22:

A 2.5-L autoclave was charged with 670 g of deionized water, 540 g of vinyl chloride monomer, 60 g of butyl methacrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and butyl methacrylate monomer were recovered. To the residue, 264.8 g of sodium dodecylbenzenesulfonate at a concentration of 15 wt% (6.62 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 8.89 parts by weight, potassium laurate: 0.56 parts by weight, per 100 parts by weight of vinyl chloride-unsaturated carboxylic acid ester copolymer). The amount of latex scale generated was as small as 0.43 wt%, pH was 6.5 falling in the range of pH 3 to 8, and the average particle diameter when measured was 0.1 µm.
The storage stability of the latex was evaluated, as a result, precipitate generation was not observed at all (A), revealing good storage stability.

### Example 23:

A 2.5-L autoclave was charged with 670 g of deionized water, 540 g of vinyl chloride monomer, 60 g of ethyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and ethyl acrylate monomer were recovered. To the residue, 56.4 g of sodium dodecylbenzenesulfonate at a concentration of 5 wt% (0.47 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.54 wt%, pH was 6.6 falling in the range of pH 3 to 8, and the average particle diameter when measured was 0.1 µm.
The storage stability of the latex was evaluated, as a result, precipitate generation was not observed at all (A), revealing good storage stability.

### Example 24:

A 2.5-L autoclave was charged with 670 g of deionized water, 540 g of vinyl chloride monomer, 60 g of 2-ethylhexyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 105.6 g of an aqueous 5 wt% sodium dodecylbenzenesulfonate solution (0.88 parts by weight based on the monomers) and 38.4 g of an aqueous 5 wt% potassium laurate solution (0.32 parts by weight based on the monomers) were continuously added over 240 minutes. After the pressure in the autoclave at 66°C was reduced to 0.70 MPa, unreacted vinyl chloride monomer and 2-ethylhexyl acrylate monomer were recovered. To the residue, 56.4 g of sodium dodecylbenzenesulfonate at a concentration of 5 wt% (0.47 parts by weight based on the monomers) and 21.6 g of potassium laurate at a concentration of 5 wt% (0.18 parts by weight based on the monomers) were additionally added to obtain a vinyl chloride-based copolymer latex (sodium dodecylbenzenesulfonate: 2.06 parts by weight, potassium laurate: 0.56 parts by weight, per 100 parts by weight of vinyl chloride-unsaturated carboxylic acid ester copolymer). The amount of latex scale generated was as small as 0.61 wt%, pH was 6.7 falling in the range of pH 3 to 8, and the average particle diameter when measured was 0.1 µm.
The storage stability of the latex was evaluated, as a result, precipitate generation was not observed at all (A), revealing good storage stability.

### Comparative Example 7:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 2.4 g of an aqueous 5 wt% potassium laurate solution (0.02 parts by weight based on the monomers) were continuously added over 240 minutes. After the pressure in the autoclave at 66°C was reduced to 0.65 MPa, unreacted vinyl chloride monomer and butyl acrylate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, potassium laurate: 0.02 parts by weight, per 100 parts by weight of vinyl chloride-unsaturated carboxylic acid ester copolymer). The amount of latex scale generated was as small as 0.52 wt%, and the average particle diameter when measured was 0.1 µm, but pH was 2.2 which was low result.
The storage stability of the latex was evaluated, as a result, precipitate generation was not observed at all (A), revealing good storage stability.

### Comparative Example 8:

A 2.5-L autoclave was charged with 670 g of deionized water, 540 g of vinyl chloride monomer, 60 g of butyl acrylate monomer, 5.4 g of 3 wt% potassium persulfate and 60 g of an aqueous 5 wt% sodium dodecylbenzenesulfonate solution (0.50 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) and 184 g of an aqueous 5 wt% potassium laurate solution (1.53 parts by weight based on the monomers) were continuously added over 240 minutes. After the pressure in the autoclave at 66°C was reduced to 0.70 MPa, unreacted vinyl chloride monomer and butyl acrylate monomer were recovered. To the residue, 32 g of sodium dodecylbenzenesulfonate at a concentration of 5 wt% (0.27 parts by weight based on the monomers) and 184 g of potassium laurate at a concentration of 5 wt% (1.53 parts by weight based on the monomers) were additionally added to obtain a vinyl chloride-based copolymer latex (sodium dodecylbenzenesulfonate: 2.06 parts by weight, potassium laurate: 3.41 parts by weight, per 100 parts by weight of vinyl chloride-unsaturated carboxylic acid ester copolymer). The amount of latex scale generated was as small as 0.83 wt%, and the average particle diameter when measured was 0.1 µm, but pH was 8.4 which was high result.
The storage stability of the latex was evaluated, as a result, precipitate generation was not observed at all (A), revealing good storage stability.

### Comparative Example 9:

A 2.5-L autoclave was charged with 670 g of deionized water, 540 g of vinyl chloride monomer, 60 g of butyl acrylate monomer, 5.4 g of 3 wt% potassium persulfate and 2.4 g of an aqueous 5 wt% sodium dodecylbenzenesulfonate solution (0.02 parts by weight based on the monomers), and by raising the temperature to 66°C, emulsion polymerization was initiated. The temperature was kept at 66°C and from 60 minutes after the initiation of polymerization, 38.4 g of an aqueous 5 wt% potassium laurate solution (0.32 parts by weight based on the monomers) was continuously added over 240 minutes. After the pressure in the autoclave at 66°C was reduced to 0.70 MPa, unreacted vinyl chloride monomer and butyl acrylate monomer were recovered. To the residue, 21.6 g of potassium laurate at a concentration of 5 wt% (0.18 parts by weight based on the monomers) was additionally added to obtain a vinyl chloride-based copolymer latex (sodium dodecylbenzenesulfonate: 0.02 parts by weight, potassium laurate: 0.56 parts by weight, per 100 parts by weight of vinyl chloride-unsaturated carboxylic acid ester copolymer). The amount of latex scale generated was as small as 0.53 wt%, pH was 6.7 falling in the range of pH 3 to 8, and the average particle diameter when measured was 0.15 µm.
The storage stability of the latex was evaluated, as a result, generation of a large amount of precipitates was observed (C), revealing poor storage stability.

### Comparative Example 10:

A 2.5-L autoclave was charged with 670 g of deionized water, 540 g of vinyl chloride monomer, 60 g of butyl acrylate monomer, 5.4 g of 3 wt% potassium persulfate, 60 g of an aqueous 5 wt% sodium dodecylbenzenesulfonate solution (0.50 parts by weight based on the monomers) and 3.2 g of 25 wt% potassium bicarbonate (0.13 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 240 minutes. After the pressure in the autoclave at 66°C was reduced to 0.70 MPa, unreacted vinyl chloride monomer and butyl acrylate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, potassium bicarbonate: 0.15 parts by weight, per 100 parts by weight of vinyl chloride-unsaturated carboxylic acid ester copolymer). pH was 4.1 falling in the range of pH 3 to 8, and the average particle diameter when measured was 0.1 µm, but the amount of latex scale generated was as large as 2.1 wt%.
The storage stability of the latex was evaluated, as a result, precipitate generation was not observed at all (A), revealing good storage stability.

### Comparative Example 11:

A 2.5-L autoclave was charged with 670 g of deionized water, 540 g of vinyl chloride monomer, 60 g of butyl acrylate monomer, 5.4 g of 3 wt% potassium persulfate, 60 g of an aqueous 5 wt% sodium dodecylbenzenesulfonate solution (0.50 parts by weight based on the monomers) and 3.2 g of 25 wt% sodium acetate (0.13 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 240 minutes. After the pressure in the autoclave at 66°C was reduced to 0.70 MPa, unreacted vinyl chloride monomer and butyl acrylate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, sodium acetate: 0.15 parts by weight, per 100 parts by weight of vinyl chloride-unsaturated carboxylic acid ester copolymer). pH was 3.9 falling in the range of pH 3 to 8, and the average particle diameter when measured was 0.1 µm, but the amount of latex scale generated was as large as 2.2 wt%.
The storage stability of the latex was evaluated, as a result, precipitate generation was not observed at all (A), revealing good storage stability.

### Comparative Example 12:

A 2.5-L autoclave was charged with 670 g of deionized water, 540 g of vinyl chloride monomer, 60 g of butyl acrylate monomer, 5.4 g of 3 wt% potassium persulfate, 60 g of an aqueous 5 wt% sodium dodecylbenzenesulfonate solution (0.50 parts by weight based on the monomers) and 3.2 g of 25 wt% sodium dihydrogenphosphate (0.13 parts by weight based on the monomers), and by raising the temperature to 66°C, emulsion polymerization was initiated. The temperature was kept at 66°C and from 60 minutes after the initiation of polymerization, 130 g of an aqueous 5 wt% sodium dodecylbenzenesulfonate solution (1.08 parts by weight based on the monomers) was continuously added over 240 minutes. After the pressure in the autoclave at 66°C was reduced to 0.70 MPa, unreacted vinyl chloride monomer and butyl acrylate monomer were recovered. To the residue, 32 g of sodium dodecylbenzenesulfonate at a concentration of 5 wt% (0.27 parts by weight based on the monomers) was additionally added to obtain a vinyl chloride-based copolymer latex (sodium dodecylbenzenesulfonate: 2.06 parts by weight, sodium dihydrogenphosphate: 0.15 parts by weight, per 100 parts by weight of vinyl chloride-unsaturated carboxylic acid ester copolymer). pH was 3.2 falling in the range of pH 3 to 8, and the average particle diameter when measured was 0.1 µm, but the amount of latex scale generated was as large as 1.9 wt%.
The storage stability of the latex was evaluated, as a result, precipitate generation was not observed at all (A), revealing good storage stability.

While the invention has been described in detail and with reference to specific embodiments thereof, it will be apparent to one skilled in the art that various changes and modifications can be made therein without departing from the spirit and scope of the invention.
This application is based on Japanese Patent Application (Patent Application No. 2010-283797) filed on December 20, 2010 and Japanese Patent Application (Patent Application No. 2011-132519) filed on June 14, 2011, the contents of which are incorporated herein by way of reference.

### Industrial Applicability

In the present invention, a vinyl chloride-based copolymer latex exhibiting excellent storage stability and having pH of 3 to 8, and a production method of the vinyl chloride-based copolymer latex, where the amount of scale generated during polymerization is lessened and the latex obtained after polymerization has pH of 3 to 8, can be provided. Accordingly, the industrial value of the present invention is evident.

## Claims

1. A vinyl chloride-based copolymer latex, comprising:
from 0.20 to 10.0 parts by weight of an organic compound having a sulfonate or sulfuric acid ester salt and from 0.05 to 3.0 parts by weight of a higher fatty acid salt, per 100 parts by weight of a vinyl chloride-vinyl carboxylate ester copolymer or 100 parts by weight of a vinyl chloride-unsaturated carboxylic acid ester copolymer,
wherein pH is from 3 to 8.

2. The vinyl chloride-based copolymer latex according to claim 1,
wherein the organic compound having a sulfonate or sulfuric acid ester salt is at least one kind selected from an alkyl sulfate ester salt, an alkylbenzenesulfonate and a dialkylsulfosuccinate.

3. The vinyl chloride-based copolymer latex according to claim 1 or 2,
wherein the organic compound having a sulfonate or sulfuric acid ester salt is a salt of an organic compound having a sulfonic acid or sulfuric acid ester with any one of potassium, sodium, ammonium and triethanolamine.

4. The vinyl chloride-based copolymer latex according to any one of claims 1 to 3,
wherein the higher fatty acid salt is a salt of a higher fatty acid with any one of potassium, sodium, ammonium and triethanolamine.

5. The vinyl chloride-based copolymer latex according to any one of claims 1 to 4,
wherein the vinyl carboxylate ester is vinyl acetate.

6. The vinyl chloride-based copolymer latex according to any one of claims 1 to 4,
wherein the unsaturated carboxylic acid ester is methacrylic acid or acrylic acid.

7. A method for producing the vinyl chloride-based copolymer latex according to any one of claims 1 to 6, comprising:
at copolymerization in an aqueous medium between a vinyl chloride monomer and a vinyl carboxylate ester monomer or between a vinyl chloride monomer and an unsaturated carboxylic acid ester monomer, performing emulsion polymerization in presence of 0.05 to 10.0 parts by weight of an organic compound having a sulfonate or sulfuric acid eater salt and from 0.05 to 1.0 parts by weight of a higher fatty acid salt, per 100 parts by weight of the vinyl chloride monomer and vinyl carboxylate ester monomer or 100 parts by weight of the vinyl chloride monomer and unsaturated carboxylic acid ester monomer.

8. The method for producing the vinyl chloride-based copolymer latex according to claim 7,
wherein the higher fatty acid salt is added sequentially or in parts.
